# EUROPEAN PATENT APPLICATION

(11) **EP 4 550 020 A1**
(43) Date of publication of application: **07.05.2025**
(21) Application number: 23207750.3
(22) Date of filing: 03.11.2023
(51) Int. Cl.: G02B 21/00, G02B 26/10

(54) **RE-SCAN OPTICAL SYSTEM**

(71) Applicant: Confocal.nl B.V., 1098 XG Amsterdam (NL)
(72) Inventor: Sterl, Florian, 1098 XH Amsterdam (NL); Lampaert, Stefan, 1098 XH Amsterdam (NL); Tromp, Bart, 1098 XH Amsterdam (NL)
(74) Representative: De Vries & Metman

(57) **Abstract**

A scan optical system (10) comprises a plurality of optical elements, comprising a first scanning element (SX) and a second scanning element (SY), and defining a light beam path from a first location to a second location, such that the light beam path comprises at least a first reflection (R_{Y1}) and a second reflection (R_{Y2}) on the second scanning element (SY), and such that the light beam path comprises a third reflection (Rxi) on the first scanning element (SX). At least one of the first reflection (R_{Y1}) is on a first side (SY₁) of the second scanning element (SY) and the second reflection (R_{Y2}) is on a second side (SY₂) of the second scanning element (SY), the third reflection (R_{X1}) is arranged between the first and second reflections (R_{Y1}, R_{Y2}) along the light beam path, and the light beam path comprises a first relay segment relaying the first and third reflections (R_{Y1,} R_{X1}) onto each other, and/or a second relay segment relaying the second and third reflections (R_{Y2}, R_{X1}) onto each other.

## Description

### TECHNICAL FIELD

The present disclosure relates to scan optical systems, such as scanning imaging systems and methods, in particular to scanning microscopy and more in particular re-scanning microscopy.

### BACKGROUND

Scanning mirrors are widely known for scanning a light beam from a light source over a target area by reflecting a light beam on the reflective facet of a mirror, and rotating (also called "scanning" as well) the mirror head and thus the reflective facet. Scanning mirrors may be used for imaging and microscopy, in particular in combination with confocal microscopy.

A re-scan confocal microscope is known from De Luca GM, Breedijk RM, Brandt RA, et al. "Re-scan confocal microscopy: scanning twice for better resolution". Biomed Opt Express. 2013;4(11):2644-2656. Published 2013 Oct 25. doi:10.1364/BOE.4.002644, hereinafter referred to as "De Luca". This microscope has two units: 1) a standard confocal microscope with a set of scanning mirrors which have double function: scanning the excitation light and de-scanning the sample light, preferably onto a pinhole, and 2) a re-scanning unit that "writes" the light that passes a pinhole onto a camera. By controlling the ratio of the angular amplitude of the respective scanning mirrors and re-scanning mirrors, the properties of the microscope can be controlled.

In such a re-scan system it is important that the scanning and re-scanning mirrors perform synchronized movements. Preferably, each sweep of the scanning mirror exactly begins, respectively ends, at the same time as a corresponding sweep of the re-scanning mirror begins, respectively ends. If the scanning and re-scanning mirror move asynchronously, the obtained image will have a low quality. As will be understood, at higher scan speeds, the mirrors move faster and the acceptable margin of absolute error for the synchronization becomes smaller. Since the degree of synchronization of the mirrors in the system of De Luca is limited, the scan speed is also limited.

Similar systems are further described in B. Straub Benedikt et al, "Versatile highspeed confocal microscopy using a single laser beam", Rev. Sci. Instrum. 91, 033706 (2020); doi 10.1063/1.5122311, which uses two scanning elements per direction (fₓ, f_{y}); G. Steinbach et al, "Fluorescence-detected linear dichroism imaging in a re-scan confocal microscope equipped with differential polarization attachment", European Biophysics Journal (2019) 48:457-463; doi 10.1007 /s00249-0l 9-0l 365-4, which uses the system of De Luca (2013) mentioned above; and in G.M.R. De Luca, et al, "Configurations of the Re-scan Confocal Microscope (RCM) for biomedical applications", J. Microscopy 266(2) 2017. pp, 166-177 doi: 10.1111/jmi.12526; and WO 2018/127566A1. Roth et al.: "Optical photon reassignment microscopy (OPRA)". Optical Nanoscopy 2013 2:5, discloses an optical photon reassignment microscope using the same scanning system for both scanning and re-scanning involving a dichroic beam splitter and an adjustable detection pinhole. The set-up is quite large and complex.

WO 2020/263094 discloses a re-scan microscope which relies on a rotatable element comprising at least two non-parallel reflective surfaces, and WO 2022/271012 discloses a compact re-scan optical system. WO 2022/005286 addresses movement direction control in a re-scanning microscope.

In view of the above, and the continuous strive for one or more of increased versatility, increased reliability and/or robustness, simpler and/or compacter construction of imaging systems, and reduced costs there is still a desire for improved scanning systems.

### SUMMARY

In view of the preceding, herewith a scan optical system is provided.

The provided system comprises a plurality of optical elements, comprising a first scanning element and a second scanning element, and defining a light beam path from a first location to a second location, such that the light beam path comprises at least a first reflection and a second reflection on the second scanning element, and such that the light beam path comprises a third reflection on the first scanning element, and at least one of:
the first reflection is on a first side of the second scanning element and the second reflection is on a second side of the second scanning element,
the third reflection is arranged between the first and second reflections along the light beam path, and
the light beam path comprises a first relay segment relaying the first and third reflections onto each other, and/or a second relay segment relaying the second and third reflections onto each other.

The optical system may be used for a scanning and/or confocal microscope, in particular for a re-scan microscope. The first and second locations may be associated with a light source location and a target location, and/or they may be associated with a target location and an image plane location, respectively.

The system may one or more of be compact, be robust, and allow high scanning frequencies. Also or alternatively, the system may allow reduction and/or obviating errors, such as one or more of varying deviations, scanning frequency mismatch, scanning phase deviation, jitter, and noise between the first and second reflections.

The first and/or second scanning element may be rotary about one or more scanning axes. The first and/or second scanning element may be configured for repeatedly scanning a light beam along a predetermined trajectory, e.g. rotating about a scanning axis, wherein the light beam may be reflected on a mirror facet of the scanning element.

The first and second sides may be opposite sides of the second scanning element, e.g. a front side and a back side of the second scanning element. The first and second reflections may be on opposite sides of the second scanning element, e.g. on a front side and a back side of the second scanning element.

In this text, "side" may be understood as facet of a multi-facet scanning element. In particular, the first and second sides may be opposite sides of a scanning element, in particular a plane scanning element, e.g. a front side and a back side of a plate mirror.

In the scanning element, the first and second sides may form reflective facets which preferably are parallel and/or equidistant to the scanning axis. In another embodiment, the scanning axis may be substantially in a reflection plane of one of the scanning element facets, which may improve accuracy of deflection angles and/or of focusing distances.

In an embodiment wherein the light beam path comprises the first relay segment relaying the first and third reflections onto each other, the first relay segment may provide an odd number of image inversions from the first to the third reflection. Also or alternatively, if the light beam path comprises the second relay segment relaying the second and third reflections onto each other, the second relay segment may provide an odd number of image inversions from the second to the third reflection. An odd number of inversions may ensure that scanning directions image orientations match and/or that image orientations are consistent for consecutive segments manipulating the image and/or relaying optical planes. This may improve image quality. See also WO 2022/005286 for more details on this topic.

If the light beam path comprises the first relay segment relaying the first and third reflections onto each other, the first relay segment may crosse itself. Also or alternatively, if the light beam path comprises the second relay segment relaying the second and third reflections onto each other, the second relay segment may cross itself. Crossing beam paths may allow reducing construction size and/or exploiting surface properties of transmissive and/or reflective optical elements dependent on angle of incidence such as high- or low-reflectivity, polarisation effects, etc. Crossing is considered herein when viewed in a direction normal to a plane generally containing the first and/or second relay segment, respectively, possibly also including one or more of the first and/or second location, the first and/or second scanning element. Crossing beam paths as used herein also includes intersecting beam paths.

The first and second scanning elements may be arranged for scanning with different characteristics. E.g. the first and second scanning elements may be arranged for scanning mutually different directions. Mutually perpendicular directions may be preferred e.g. for one or more of effectively and/or reliably scanning a surface, accommodating reference directions, matching system elements. Also or alternatively, the first and second scanning elements may be arranged for scanning with different speeds, e.g. the first scanning element scanning relatively fast and the second scanning element scanning relatively slow. The first scanning element may scan a first number of unit steps associated with the second scanning element scanning a second number of unit steps, e.g. more or fewer unit steps, which may have a same or a different size as/than the first unit step. E.g. the first scanning element may be arranged for scanning scan lines, whereas the second scanning element is arranged for selecting and/or adjusting (position of) the scan lines in a perpendicular direction.

It is noted that, unless specified otherwise, properties and/or functions described with reference to, and/or associated with, a respective one of the first and second scanning elements may be exchanged and associate with the other one of the first and second scanning elements.

The light beam path may comprise a fourth reflection on the first scanning element. Thus, the light beam path comprises at least two reflections on each of the first and second scanning elements, which may assist providing a compact and/or reliable system. A combination of third and fourth reflections may facilitate providing the system as a re-scan optical system.

The third and fourth reflections may be on one side of the scanning element. This may be preferred for a re-scan optical system.

However, the third reflections may be on a first side of the first scanning element and the fourth reflection may be on a second side of the first scanning element, which may be opposite the first side, e.g. a front side and a back side of the second scanning element.

The fourth reflection may be arranged between the first and second reflections along the light beam path or it may be arranged before or after both the first and second reflections.

The light beam path may comprise a third relay segment relaying the first and fourth reflections onto each other and/or a fourth relay segment relaying the second and fourth reflections onto each other and/or a fifth relay segment relaying the third and fourth reflections onto each other.

The plurality of optical elements may define an illumination light path for directing a beam of illumination light from a light source at a light source location to a target location. Also or alternatively, the plurality of optical elements may define a sample light path for directing a beam of sample light from a/the target location to an image plane location for an image plane of an optical detector. Then, the light beam path may form at least part of the illumination light path and/or of the sample light path.

Thus, the light beam path may be comprised in an illumination light path for directing a beam of illumination light from a light source location to a target location. A sample may be held at the target location. The (beam of) illumination light may be received from a light source at the light source location. The system may be provided with the light source.

Also or alternatively, the light beam path may be comprised in a sample light path for directing a beam of sample light from a target location to an image plane location for an image plane of an optical detector.

The illumination light path and the sample light path may at least partly overlap and/or coincide. The illumination light path and the sample light path may be defined and/or be separated at least in part by an optical separation element such as one or more of a wavelength dependent filter and/or -reflector (such as a reflective filter), a polarization dependent filter and/or -reflector, a beam splitter etc.

The system may comprise a light source for generating the illumination light at the light source location. The system may comprise a sample holder for holding a sample at the target location. The (beam of) sample light may be received from a sample at the target location. The system may comprise an optical detector defining an image plane at the image plane location.

The system may comprise a controller connected to the first and/or second scanning element for controlling operation of the respective scanning element, e.g. one or more of a scanning frequency, a mean scanning position and/or a scanning angle about a mean scanning position, stationary scanning element position for defining a predetermined reflection.

The plurality of optical elements may define at least the illumination light path and the light beam path forms at least part of the illumination light path; the illumination light path comprising, along the illumination light path from the light source location towards the target location, an incident illumination light path segment and at least one of a first scanning illumination light path segment defined by the first scanning element, and a second scanning illumination light path segment defined by the second scanning element.

The incident illumination light path segment may be or comprise a stationary light path segment.

The first and/or second scanning illumination light path segment facilitate locally illuminating a sample in several locations, by scanning an illumination light beam over the sample. Illumination light of the illumination light beam may cause sample light: light reflected or changed by the sample, and/or light emitted by the sample. Sample light may e.g. comprise one or more of spectral-composition-changed illumination light, polarization-changed illumination light, wavelength converted illumination light, luminescence light such as fluorescence, phosphorescence, chemiluminescence, bio-luminescence, etc.

The system may comprise, along the sample light path from the target location towards the image plane location, a re-scanning sample light path segment.

The system may form or provide a confocal scanning optical system. The de-scanned sample light path segment may comprise or lead to an optical aperture, e.g. a pinhole. The pinhole may be adjustable, e.g. at least partly stepwise and/or at least partly continuously adjustable. The scanning sample light path segment and the de-scanned sample light path segment may be separated and/or defined by one of the first and second scanning element.

The scanning sample light path segment may comprise a first scanning sample light path segment and a second scanning sample light path segment. The de-scanned sample light path segment may comprise a first de-scanned sample light path segment and a second de-scanned sample light path segment. The first and second scanning sample light path segments may be consecutive along the sample light path and/or they may be separated and/or defined by the first or second scanning element, respectively.

The first and second de-scanned sample light path segment may be consecutive along the sample light path and/or they may be separated and/or defined by the first or second scanning element, respectively.

The first scanning sample light path segment and the first de-scanned sample light path segment may be associated with each other. The second scanning sample light path segment and the second de-scanned sample light path segment may be associated with each other.

The re-scanning sample light path segment may comprise a first re-scanning sample light path segment and a second re-scanning sample light path segment. The first and second re-scanning sample light path segments may be consecutive along the sample light path and/or they may be separated and/or defined by the first or second scanning element.

The first re-scanning sample light path segment may be associated with the first scanning sample light path segment and/or with the first de-scanned sample light path segment. The second re-scanning sample light path segment may be associated with the second scanning sample light path segment and/or with the second de-scanned sample light path segment.

In one or more embodiments, a light beam path relay segment is arranged along the light beam path between the first location to the second location. The first location may be or may be associated with a light source location, and/or the second location may be or may be associated with a target location of a target, e.g. a target location of a sample. Another target (location) may be (a location of) a sensor or another optical element, or a target to be worked such as an object to be one or more of illuminated, heated, at least partly destroyed (e.g. laser cutting), etc.; other optical processes will be apparent to a skilled reader.

Any relay segment disclosed herein may form a loop. A loop-shaped relay segment relaying a first and a second reflection on a reflector onto each other allows counteracting angular differences of light incident on (and hence: reflected by) the reflector causing the first (initial) reflection onto which the second (subsequent) reflection is relayed. Hence, (light along) a stationary incident light beam path segment corresponding to a constant direction of incidence onto the reflector may result in (light along) a stationary resultant light beam path segment corresponding to a constant direction of emission/reflection from the reflector after (the light has completed) the (loop shaped) relay segment.

The light beam path relay segment may be arranged such that along the light beam path an initial incidence angle is relatively sharp and a subsequent incidence reflection angle is relatively blunt.

### BRIEF DESCRIPTION OF THE DRAWINGS

The above-described aspects will hereafter be more explained with further details and benefits with reference to the drawings showing a number of embodiments by way of example.
Fig. 1 shows an embodiment of an optical scan system, comprising a relay segment and providing one reflection on a first scanning element, and two reflections on opposite sides of a second scanning element;
Fig. 2 shows an embodiment of an optical scan system, facilitating spatially filtered confocal re-scanning microscopy, and comprising a relay segment and providing one reflection on a first scanning element, and two reflections on opposite sides of a second scanning element;
Fig. 3 shows an embodiment of an optical scan system, facilitating spatially filtered confocal re-scanning microscopy, and comprising a relay segment and providing one reflection on a first scanning element, and two reflections on opposite sides of a second scanning element;
Fig. 4 shows an embodiment of an optical scan system, facilitating spatially filtered confocal re-scanning microscopy, and comprising two relay segments and providing two reflections on opposite sides of each of a first and a second scanning element;
Fig. 5 shows an embodiment of an optical scan system, facilitating spatially filtered confocal re-scanning microscopy, and comprising two relay segments and providing two reflections on the same side of each of a first and a second scanning element.

### DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral, where helpful individualised with alphabetic suffixes.

Further, unless otherwise specified, terms like "detachable" and "removably connected" are intended to mean that respective parts may be disconnected essentially without damage or destruction of either part, e.g. excluding structures in which the parts are integral (e.g. welded or moulded as one piece), but including structures in which parts are attached by or as mated connectors, fasteners, releasable self-fastening features, etc. The verb "to facilitate" is intended to mean "to make easier and/or less complicated", rather than "to enable".

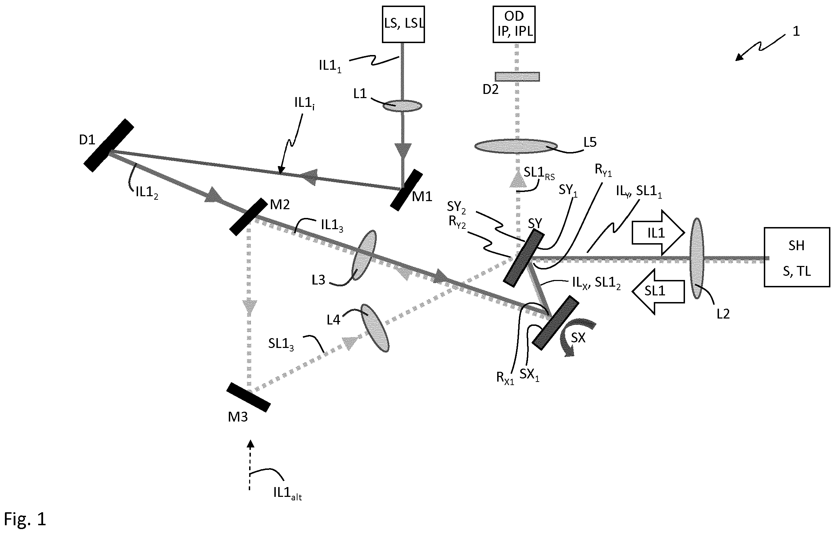

Fig. 1 shows schematically an exemplary optical scan system 1. The system 1 is very versatile and may e.g. be used for scanning imaging, focal and confocal imaging, and re-scan confocal imaging. Any such imaging may preferably comprise or be microscopy imaging.

The system 1 comprises a plurality of optical elements comprising a first scanning element SX and a second scanning element SY.

The system may comprise a light source LS at a light source location LSL, a sample holder SH for holding a sample S at a target location TL, and an optical detector OD such as a camera defining an image plane IP at an image plane location IPL. A target location TL may be positioned in the sample and/or may be an image plane of a microscope or other optical instrument providing an image of the sample S proper.

The first scanning element SX provides a plane mirror facet rotary about scan axis, here an X axis. The second scanning element SY provides two parallel plane mirror facets on opposite sides rotary about another axis, here a Y axis. The X and Y axes here are, as a preferred option, perpendicular to each other.

For ease of reference, in the following descriptions of Figures and embodiments, wherever expedient, instead of terms "first" and "second", also the directions "X" and "Y" may be used.

Note that any system disclosed herein may comprise more, less, and/or other optical elements. Also or alternatively, unless otherwise specified, illustrated optical elements may in reality be suitably embodied as compound optical elements, e.g. an indicated lens being formed by a compound lens and/or lens array. A beam path segment may be directed or folded using one or more additional mirrors. One or more optical filtering elements and/or polarization elements may be used for spectral control and/or polarization control.

In the shown system 1, the optical elements define several light beam paths and segments therein:
- a first illumination light beam path IL1 from the light source LS at the light source location LSL to the target location TL (drawn in solid lines);
- a first sample light beam path SL1 from the target location TL to (the image plane location IPL) of the optical detector OD (drawn in broken lines).

The first illumination light beam path IL1 comprises along the first illumination light beam path IL1 from the light source location LSL to the target location TL:
- an incident illumination light path segment IL1ᵢ from the light source location LSL to the first scanning element SX, forming a static path segment,
- a reflection on the first scanning element SX (at R_{X1}),
- an X scanning illumination light path segment IL1_{X} from the first scanning element SX to the second scanning element SY,
- a reflection on the second scanning element SY (at R_{Y1}), and
- a Y scanning illumination light path segment IL1_{Y} from the second scanning element SY to the target location TL passing a scan lens L2, which lens may be a microscope objective.

It is preferred that the X scanning illumination light path segment IL1_{X} from the first scanning element SX to the second scanning element SY is as short as possible and/or is formed as a relay segment for relaying the reflection (R_{X1}) on the first scanning element SX onto the reflection (R_{Y1}) on the second scanning element SY (not shown). Thus, scanning about the X-axis is little or not affected by position changes of the beam spot on the second scanning element SY due to the X-scanning and/or by other effects of scanning about the Y-axis, and/or the other way around (scanning about Y-axis is little or not affected by scanning about X-axis).

In view of the limited place in the Figures and the fact that, at least in the Figures, multiple reflections may occur at substantially the same positions for multiple beam paths, in his disclosure all respective reflections on the scanning elements are referred to with the same respective reference symbols R_{X1}, R_{X2}, R_{Y1}, R_{Y2} generally indicating the locations of the respective reflections, irrespective of which light beam path (direction) is discussed, the latter being clear from the context.

By appropriate control over the scanning element SX, SY, scanning in X and/or Y directions may be controlled independently and/or combined e.g. for only scanning in one or both X, Y directions. Hence, the X scanning illumination light path segment IL1_{X} and Y scanning illumination light path segment IL1_{Y} together form a dynamic path.

The shown incident illumination light path segment IL1ᵢ, comprises subsegments IL1₁, IL1₂, IL1₃, and comprises a passage through collimator lens L1, reflections on mirror M1 and on mirror D1 (possibly being a dichroic mirror or other reflective filter), and passages through dichroic mirror (or other reflective filter) M2 and lens L3. Note that orientations of mirrors depicted in Fig. 1 may be inaccurate and/or not scale, in particular D1 and SX. Mirror D1 may be rotary in controlled manner, like a scanning mirror or as a variable dichroic member. Note that "dichroic" is used as generic term and may also refer to a polychroic element having wavelength-specific properties for two or more wavelengths in a wavelength range of about 300 nm - about 2,5 micrometer in particular in range of about 300 nm - 1,5 micrometer or visible range (about 400 nm - 800 nm).

In particular subsegments IL1₁, IL1₂, may be arranged differently and may comprise one or more optional lenses possibly associated with lens L3. Also or instead of mirror M2, mirror M3 may be dichroic, e.g. for passage of illumination light to the first scanning element SX along another path of incidence (see dashed arrow IL1ₐₗₜ to proceed along IL1₃).

In use, illumination light from the light source LS directed along the illumination light beam path IL1 is focused on the sample S providing an illumination spot for locally illuminating the sample. By scanning the first and/or second scanning element SX, SY, the illumination spot may be scanned over (on and/or through) the sample S. There, the illumination light may cause sample light.

Sample light may be collected and directed by the first sample light beam path SL1 from the target location TL to (the image plane location IPL) of the optical detector OD.

The first sample light beam path SL1 comprises, along the first sample light beam path SL1 from the target location TL to (the image plane location IPL) of the optical detector C:
- a first scanning sample light beam path segment SL1₁, from the target location to the second scanning element SY passing through the scan lens L2;
- a first reflection (R_{Y1}) on the second scanning element SY;
- a second scanning sample light beam path segment SL1₂ from the second scanning element SY to the first scanning element SX, a reflection on the second scanning element SX (R_{X1}; also referred to as "third reflection";
- a further sample light path segment SL1₃ from the first scanning element SX again to the second scanning element SY, here passing through optional lenses L3, L4 and comprising reflections on mirrors M2, M3 which have high reflection for the (expected) sample light and at least one of them (e.g. in Fig. 1: mirror M2) may require a suitably high transmission for the illumination light, this further sample light path segment SL1₃ may also be referred to as "emission loop";
- a second reflection (R_{Y2}) on the second scanning element SY; and
- a re-scanning sample light path segment SL1_{RS} through re-scan lens L5 and through an optional dichroic element and/or other filter D2 for filtering only light components having properties of interest, e.g. particular wavelengths in sample light, of incident light and removing undesired light component such as portions of illumination light.

In the shown embodiment the lenses L3, L4 are arranged such the that the further sample light path segment SL1₃ is a relay segment, relaying the sample light's (third) reflection (R_{X1}) on the first scanning element SX onto the second reflection (R_{Y2}) on the second scanning element SY.

Here, the first and second reflections (R_{Y1}, R_{Y2}) are, as shown, optionally on first and second sides SY1, SY2 of the second scanning element SY which here are on opposite sides of the second scanning element SY.

As indicated above, the first scanning element SX is rotary about an X axis, the second scanning element SY is rotary about a Y axis, perpendicular to the X axis. The first and second scanning elements SX, SY are connected to a controller (not shown) for controlled scanning the respective first and second scanning elements SX, SY, which controlled scanning may comprise coordinated and/or independent scanning.

In use, sample light from a sample S on the target location TL may be collected by the scan lens L2 which may be focused on or in the sample S. At least part of the collected sample light then travels along the sample light path SL1 to the camera OD, being focused on the image plane IP thereof by the re-scan lens L5 which may be formed by a camera objective. Thus, sample light may be imaged on the optical detector.

By scanning the first and/or scanning elements SX, SY, sample light from different portions of the sample S may be imaged. By scanned illumination (along IL1) and simultaneous scanned imaging, the sample may be both locally illuminated and the locally caused sample light may be collected (along SL1).

Note that mirror M2 (and/or mirror M3) being dichroic provides a high reflection coefficient for the (expected) sample light and a high transmission for the illumination light.

If the illumination light is scanned in the Y-direction along IL_{Y} from the first reflection (R_{Y1}) on the second scanning element SY, the sample light along SL₁ is de-scanned in the Y direction upon the first reflection (R_{Y1}) on the second scanning element SY, up to the second reflection (R_{Y2}) on the second scanning element SY.

Likewise, if the illumination light is scanned in the X-direction along IL_{X} (and hence also along IL_{Y}) from the third reflection (R_{X1}) on the first scanning element SX, the sample light along SL₁ is de-scanned in the X direction upon reflection (R_{X1}) on the first scanning element SX.

Hence, from the sample S to the first scanning element SX the sample light path segment SL1₁ and SL1₂ form a dynamic path, and from (reflection R_{X1} on) the first scanning element SX to (reflection R_{Y2} on) the second scanning element SY, the sample light path segment SL1₃ forms a static path. Between (reflection R_{X1} on) the first scanning element SX and (reflection R_{Y2} on) the second scanning element SY a relay segment may be arranged, not shown, reducing scanning/de-scanning effects between the scanning elements.

The second reflection (R_{Y2}) on the second scanning element SY causes re-scanning of the sample light path SL1 over the image plane of the camera OD, focused by the re-scan lens L5. By virtue of the relay segment, deviations may be reduced or prevented. Here in particular, by the further sample light path segment SL1₃ being a relay segment, deviations of the optical path SL1 in the Y direction due to the X scanning element are counteracted and the re-scanning in the Y-direction is in accordance with the scan angle of the first reflection (R_{Y1}) on the second scanning element SY.

The relay segment also allows that scanning angles and image orientations match between the reflections (R_{X1}, R_{Y2}) (or rather: the planes defining the reflections) are relayed by the relay segment so that scanning errors and/or image quality loss by unmatched inversions may be reduced or prevented (see e.g. WO 2022/005286 for further discussion on inversions in a static path of a confocal re-scanning microscope).

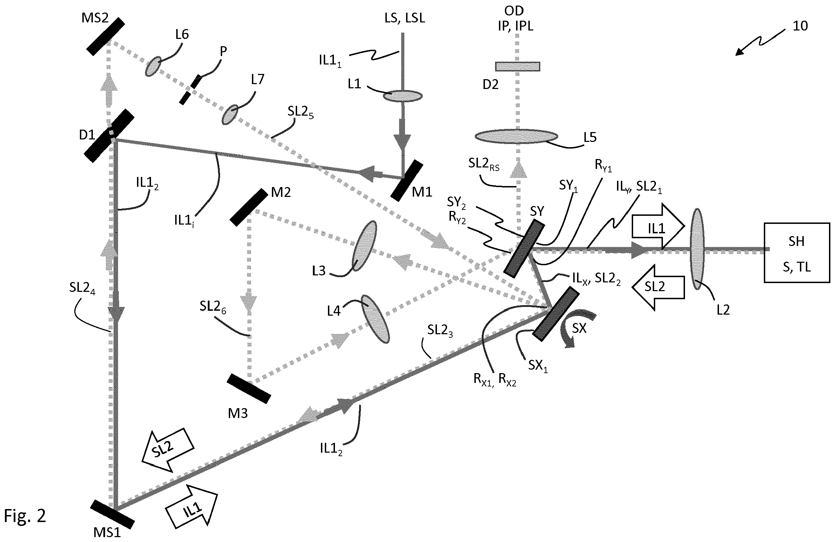

Fig. 2 indicates system 10 which allows confocal re-scanning microscopy with spatial filtering and may be seen as a further development of the system 1 of Fig. 1.

The system 10 comprises all elements of system 1 and several additional optical elements: mirrors MS1 and MS2; and lenses L5-L6 and pinhole P. The pinhole P or an assembly of lenses L5-L6 and pinhole P may be exchangeable with may be controllable by a controller of the system 10 (not shown).

Several of the optical elements define a second illumination light beam path IL2 which differs from the first illumination light beam path IL1. In particular, the second illumination light beam path IL2 comprises an incident illumination light path segment IL2ᵢ from the light source location LSL to the first scanning element SX, forming a static path segment, comprising a passage through collimator lens L1, reflections on mirror M1 and on reflective filter D1, forming first subsegment IL2₁, and reflections on beam steering mirror MS1 to a reflection (R_{X1}) on the first scanning element SX, forming second subsegment IL2₂.

The angle of incidence of the second illumination light beam path IL2 on the first scanning element SX for the reflection (R_{X1}) is such that the subsequent dynamic path segment of the second illumination beam path IL2 generally is substantially the same as of the first illumination light beam path IL1 of Fig. 1:
- an X scanning illumination light path segment IL2_{X} from the first scanning element SX to the second scanning element SY,
- a reflection (R_{Y1}) on the second scanning element SY, and
- a Y scanning illumination light path segment IL2_{Y} from the second scanning element SY from the second scanning element SY to the target location TL passing scan lens L2, which lens may be a microscope objective.

The system 10 provides a second sample light beam path SL2 from the target location TL to (the image plane location IPL) of the optical detector C.

The second sample light beam path SL2 comprises, along the sample light beam path SL2 from the target location TL to (the image plane location IPL) of the optical detector C:
- a first scanning sample light beam path segment SL2₁, through scan lens L2;
- a first reflection (R_{Y1}) on (a first side SY, of) the second scanning element SY;
- a second scanning sample light beam path segment SL2₂;
- a (third) reflection (R_{X1}) on the first scanning element SX;
- a static sample light path segment SL2₃, SL2₄, SL2₅, comprising (subsequently) reflection on mirror MS1, and passage through reflective filter D1 which allows separating sample light (along sample light path SL2) from illumination light (along illumination light path IL2), thereafter the static sample light path segment SL2₅ comprises reflection on mirror MS2, and passage through spatial filtering assembly of lens L6, pinhole P and lens L7, wherein the lenses L6-L7 are confocally arranged with their foci in the pinhole P;
- a second reflection (R_{X2}) on the first scanning element SX;
- a further sample light path segment SL2₆ through lenses L3, L4 and comprising reflections on mirrors M2, M3, this further sample light path segment SL2₆ is also referred to as "emission loop";
- a second reflection (R_{Y2}) on the second scanning element SY; and
- a re-scanning sample light path segment SL2_{RS} through re-scan lens L5 and optional filter D2.

It is noted that the second sample light beam path SL2₆, SL2_{RS}, after the second reflection (R_{X2}) on the first scanning element RX is the same as described above for (the first sample light beam path SL1 (SL1₃, SL1_{RS}) of the embodiment of) Fig. 1. Thus, as before, the further sample light path segment SL2₆ or "emission loop" is a relay segment, relaying the second reflection (R_{X2}) on the first scanning element onto the second reflection (R_{Y2}) on the second scanning element RY facilitating provision of a re-scanning scanning optical microscopy.

An important difference from Fig. 1, is that the sample light is spatially filtered in the static sample light path segment SL2₃, SL2₄, SL2₅, allowing reduction of background noise and in particular providing confocal re-scanning microscopy. The lenses L5, L6 may be the same in terms of optical properties (in particular focal length) or differ. In the latter case, the sample light beam may be resized, e.g. magnified, as desired by suitable selection of lens strength. By using a suitable number of reflections and foci, here two reflections (MS2, MS1) and one focus (at the pinhole P), a suitable number of inversions may be provided for improving resolution; otherwise one or more of additional reflections, additional foci and/or one or more prisms may be used in the static path, as set out in WO 2022/005286.

A further difference from Fig. 1 is that the sample light beam path SL2 reflects twice on the first scanning element RX (R_{X1}, R_{X2}). This provides re-scanning of the sample light in the X-direction (first reflection R_{X1} for de-scanning, second reflection R_{X2} for re-scanning). Thus, the system 10 facilitates re-scanning confocal microscopy in two dimensions. The system 1 of Fig. 1 also allows re-scanning confocal microscopy in two dimensions but due to the single reflection of the sample light beam path in the X-direction on the X-scanner, providing an image from successive scans may be more complex and/or method may be required to construct an image with matching orientations of illumination spots on the imaging plane and the scan direction of the X-scanner. In Fig. 2, both these reflections are on the same side SX₁ of the first scanning element SX, however both a first side and a second, different side may be used (not shown here).

Note that in systems disclosed herein, all beam path segments may generally lie in a single plane (e.g. parallel to a table top surface of an optical table) wherein the rotary axis of the first scanning element SX extends in the plane and the rotary axis of the second scanning element SY extends generally perpendicular to the plane.

From a comparison of Figs. 1 and 2 it may be noted that compared to system 1 in Fig. 1, in system 10 of Fig. 2, mirrors MS1 and MS2, lenses L6 and L7 and a pinhole P are added. By changing, in system 10 of Fig. 2, alignment of the mirror D1 and the first scanning element SX, the beam paths and functionality of the system 1 of Fig. 1 may be retrieved. From a comparison of Figs. 1 and 2, it will also be understood that in system 10 of Fig. 2 at least an alternative illumination light beam path IL1ₐₗₜ may be used, e.g. using mirror M3 as a dichroic mirror or other reflective filter (as indicated) or M2 (not shown).

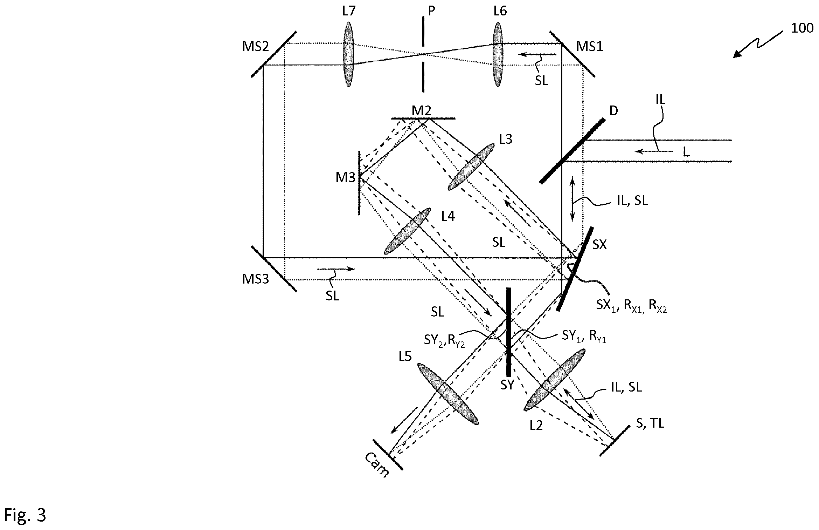

Fig. 3 shows as another embodiment, a system 100 comprising a plurality of optical elements defining an illumination light beam path IL4 from a light source L, e.g. a laser, at a first location to a sample S or other target at a second, target, location TL. The plurality of optical elements also define a sample light beam path from the second location to a camera "Cam" as an optical detector at a third location. The system 100 comprises a first scanning element SX and a second scanning element SY.

In Fig. 3, beam outlines along particular path segments are indicated with solid and dotted lines indicating a beam orientation (or image orientation) about the local propagation direction of the beam. Also, beam outlines are indicated with dashed lines indicating an exemplary direction shift (/ position shift) of the beam (/ beam focus) due to an exemplary rotation (not indicated) of scanning element SX.

Note that the scanning orientations of the scanning elements SX, SY may be exchanged without affecting functionality.

The system 100 is configured to direct:
- illumination light from the light source L along the illumination light beam path:
   - from the first location to (a reflection on) a reflective filter D,
   - to (a reflection (R_{X1}) on (a first side SX₁ of)) the first scanner SX, providing scanning in X-direction,
   - to (a reflection (R_{Y1}) on (a first side SY₁ of)) the second scanner SY, providing scanning in Y-direction, and
   - to the second location TL and the sample S via focusing lens L2,

So that focused illumination light may be scanned in X- and/or Y-direction over the sample S; and to direct:
- sample light from the sample S along the sample light beam path SL:
   - from the second location TL via the lens L2
   - to (a first reflection R_{Y1} on (a first side SY₁ of)) the second scanner SY, providing de-scanning in Y direction,
   - to (a third reflection R_{X1} on (a first side SX, of)) the first scanner SX, providing de-scanning in X direction, and
   - along a static beam path segment via suitable beam directing optical elements (here static path mirrors MS1-MS3) through reflective filter D, through lens L6 to a pinhole P for spatial filtering, and further along the static beam path segment through lens L7, the lenses L6, L7, being focused on the pinhole,
   - to (a fourth reflection R_{X2} on (the first side SX₁ of)) the first scanner SX, providing re-scanning in X direction,
   - to (a second reflection R_{Y2} on (a second side SY₂ of)) the second scanner SY, providing re-scanning in Y direction,
      via a relay section, defined by lenses L3, L4, and here also mirrors M2, M3, relaying the fourth reflection R_{X2} on the first scanner SX onto the second reflection R_{Y2} on the second scanner SY,
   - to the detector Cam via focusing lens L5,
so that focused spatially filtered sample light may be scanned in X- and/or Y-direction over an image plane of the optical detector Cam.

Thus are provided in the system 100:
- a scanning beam path segment in the illumination beam path from the second scanning element SX to the second location TL (and the sample S);
- a scanning beam path segment in the sample light beam path from the second location TL to the second scanning element SX;
- a static beam path segment from the second scanning element SX (to the pinhole and from the pinhole) back to the second scanning element SX;
- a re-scanning beam path segment from the second scanning element SX to (an image plane of) the optical detector Cam.

Like system 10 of Fig. 2, system 100 of Fig. 3 provides re-scanning confocal microscopy system configured to cause two reflections on the same side of the first scanning element, and two reflections on different, opposite sides, of the second scanning element, with a relay segment along the sample light beam path relaying reflections on the scanning elements from the one scanning element onto the other scanning element in the re-scanning beam path segment.

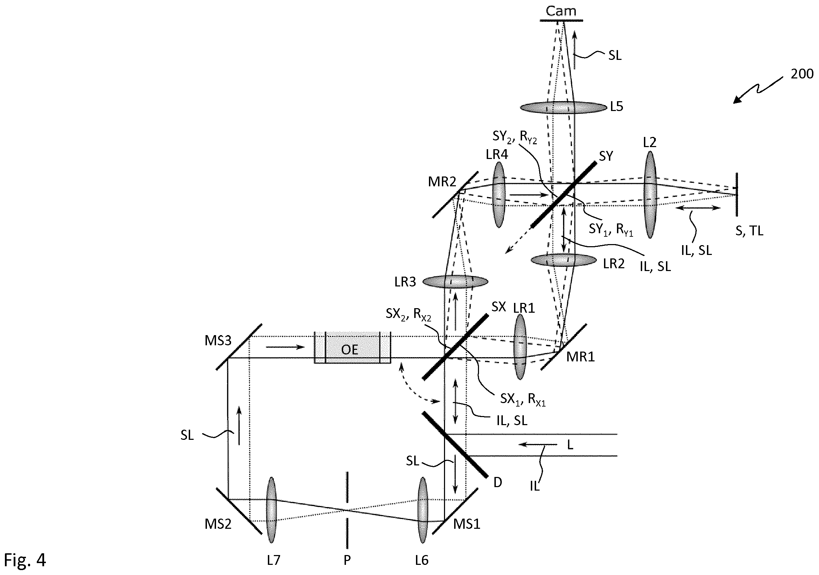

Fig. 4 shows, like Fig. 3, as another embodiment, a system 200comprising a first scanning element SX and a second scanning element SY.

Like Fig. 3, in Fig. 4, beam outlines along particular path segments are indicated with solid and dotted lines indicating a beam orientation (or image orientation) about the local propagation direction of the beam. Also, beam outlines are indicated with dashed lines indicating an exemplary direction shift (/ position shift) of the beam (/ beam focus) due to an exemplary rotation (not indicated) of scanning element SX.

Note that the scanning orientations of the scanning elements SX, SY may be exchanged without affecting functionality.

The system 200 is configured to direct:
- illumination light from the light source L along the illumination light beam path:
   - from the first location to (a reflection on) a reflective filter D,
   - to (a reflection (R_{X1}) on (a first side SX₁ of)) the first scanner SX, providing scanning in X-direction,
   - to (a reflection (R_{Y1}) on (a first side SY₁ of)) the second scanner SY, providing scanning in Y-direction,
      via a first relay segment, defined by lenses LR1, LR2, and here also mirror MR1, relaying the reflection R_{X1} on the first scanner SX onto the reflection R_{Y1} on the second scanner SY, and
   - to the second location TL and the sample S via focusing lens L2,
      so that focused illumination light may be scanned in X- and/or Y-direction over the sample S; and
- sample light from the sample S along the sample light beam path SL:
   - from the second location TL via the lens L2
   - to (a first reflection R_{Y1} on (the first side SY₁ of)) the second scanner SY, providing de-scanning in Y direction,
   - to (a third reflection RX1 on (a first side SX1 of)) the first scanner SX, providing de-scanning in X direction,
      via the first relay segment, defined by lenses LR2, LR1, and mirror MR1, relaying the first reflection R_{Y1} on the second scanner SX onto the third reflection R_{X1} on the first scanner SX, and
   - along a static beam path segment via suitable beam directing optical elements (here static path mirrors MS1-MS3 and an optional further optical element OE for rotating the beam orientation about the local direction of propagation, e.g. a dove prism, a Préchant prism, a lens system generating a focus etc., see WO 2022/005286) through reflective filter D, through lens L6 to a pinhole P for spatial filtering, and further along the static beam path segment through lens L7, the lenses L6, L7, being focused on the pinhole P,
   - to (a fourth reflection R_{X2} on (the second side SX₂ of)) the first scanner SX, providing re-scanning in X direction,
   - to (a second reflection R_{Y2} on (a second side SY₂ of)) the second scanner SY, providing re-scanning in Y direction,
      via a second relay section, defined by lenses LR3, LR4, and here also mirror MR3, relaying the fourth reflection R_{X2} on the first scanner SX onto the second reflection R_{Y2} on the second scanner SY,
   - to (an image plane of) the detector Cam via focusing lens L5,
so that focused spatially filtered sample light may be scanned in X- and/or Y-direction over an image plane of the optical detector Cam.

Thus are provided in the system 200:
- a scanning beam path segment in the illumination beam path from the second scanning element SX to the second location TL and the sample S;
- a scanning beam path segment in the sample light beam path from the second location TL to the second scanning element SX;
- a static beam path segment from the second scanning element SX (to the pinhole and from the pinhole) back to the second scanning element SX;
- a re-scanning beam path segment from the second scanning element SX to (an image plane of) the optical detector.

Again, system 200 of Fig. 4 provides a re-scanning confocal microscopy system however configured to cause two reflections on different, opposite sides, of each of the first and the second scanning element, with a relay segment along the sample light beam path relaying reflections on the scanning elements from the one scanning element onto the other scanning element in the scanning beam path segment and in the re-scanning beam path segment. By such provision of a relay segment between each pair of successive reflections on the scanning elements, scanning accuracy may be increased.

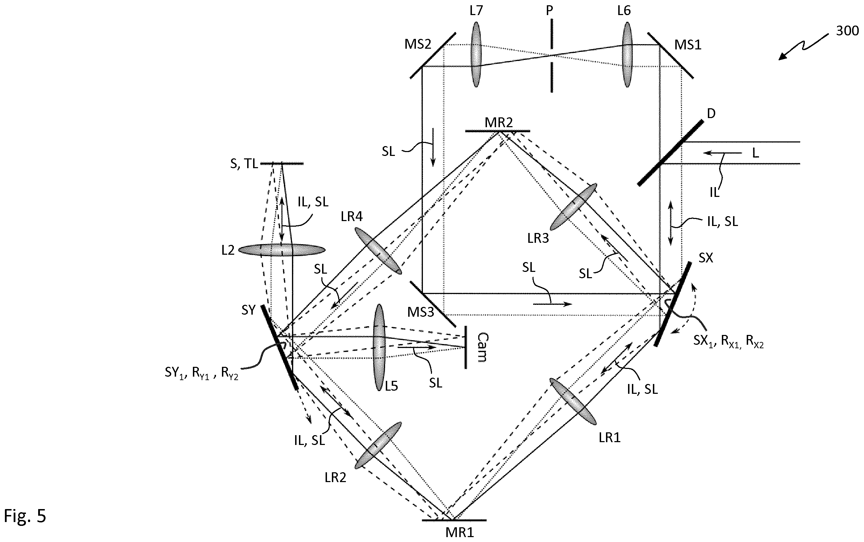

Fig. 5 shows as another embodiment, a system 300 comprising a first scanning element SX and a second scanning element SY.

Like in Figs. 3-4, beam outlines along particular path segments are indicated with solid and dotted lines indicating a beam orientation (or image orientation) about the local propagation direction of the beam. Also, beam outlines are indicated with dashed lines indicating an exemplary direction shift (/ position shift) of the beam (/ beam focus) due to an exemplary rotation (not indicated) of scanning element SX.

Note that the scanning orientations of the scanning elements SX, SY may be exchanged without affecting functionality.

The system 300 is configured to direct:
- illumination light from the light source L along the illumination light beam path:
   - from the first location to (a reflection on) a reflective filter D,
   - to (a reflection (R_{X1}) on (a first side SX₁ of)) the first scanner SX, providing scanning in X-direction,
   - to (a reflection (R_{Y1}) on (a first side SY₁ of)) the second scanner SY, providing scanning in Y-direction,
      via a first relay section, defined by lenses LR1, LR2, and here also mirror MR1, relaying the reflection R_{X1} on the first scanner SX onto the reflection R_{Y1} on the second scanner SY, and
   - to the second location TL and the sample S via focusing lens L2,
      so that focused illumination light may be scanned in X- and/or Y-direction over the sample S; and
- sample light from the sample S along the sample light beam path SL:
   - from the second location TL via the lens L2
   - to (a first reflection R_{Y1} on (the first side SY₁ of)) the second scanner SY, providing de-scanning in Y direction,
   - to (a third reflection RX1 on (the first side SX1 of)) the first scanner SX, providing de-scanning in X direction,
      via the first relay segment, defined by lenses LR2, LR1, and mirror MR1, relaying the first reflection R_{Y1} on the second scanner SX onto the third reflection R_{X1} on the first scanner SX, and
   - along a static beam path segment via suitable beam directing optical elements (here static path mirrors MS1-MS3 through reflective filter D, through lens L6 to a pinhole P for spatial filtering, and further along the static beam path segment through lens L7, the lenses L6, L7, being focused on the pinhole P,
   - to (a fourth reflection R_{X2} on (the first side SX₂ of)) the first scanner SX, providing re-scanning in X direction,
   - to (a second reflection R_{Y2} on (the first side SY₂ of)) the second scanner SY, providing re-scanning in Y direction,
      via a second relay segment, defined by lenses LR3, LR4, and here also mirror MR3, relaying the fourth reflection R_{X2} on the first scanner SX onto the second reflection R_{Y2} on the second scanner SY,
   - to (an image plane of) the detector Cam via focusing lens L5,
so that focused spatially filtered sample light may be scanned in X- and/or Y-direction over an image plane of the optical detector Cam.

Thus are provided in the system 200:
- a scanning beam path segment in the illumination beam path from the second scanning element SX to the second location TL and the sample S;
- a scanning beam path segment in the sample light beam path from the second location TL to the second scanning element SX;
- a static beam path segment from the second scanning element SX (to the pinhole and from the pinhole) back to the second scanning element SX;
- a re-scanning beam path segment from the second scanning element SX to the optical detector.

Again, system 200 of Fig. 4 provides a re-scanning confocal microscopy system, however configured to cause two reflections on the same side of each of the first and the second scanning element, with a relay segment along the sample light beam path relaying reflections on the scanning elements from the one scanning element onto the other scanning element in the scanning beam path segment and in the re-scanning beam path segment. By such provision of a relay segment between each pair of successive reflections on the scanning elements, scanning accuracy may be increased.

It is noted that all shown systems may be, as a preferred option, arranged telecentric with respect to at least one of the scanning beam path and the re-scanning beam path. Preferably the system is bi-telecentric with respect to both the scanning beam path and the re-scanning beam path. This may simplify combination of the re-scan optical system with further optical systems, in particular in view of optical alignment of the various systems. Such further optical systems may in particular comprise a microscope or microscope objective in, or connected with, the scanning beam path, and/or an imaging system in, or connected with, the re-scanning beam path. Note further that instead of a sample S at the second location a microscope objective and/or other optical system may be arranged, cooperating with the presently provided system (embodiment).

With the present concepts several beneficial embodiments and aspects may be provided. E.g.:
For each scanning axis, use of a single scanner (= scanning element) SX, SY suffices.

The sample light is relayed as good a possible from one scanner to the other, for the sample light both on the scan side and on the re-scan side of the sample light beam path. This may be provided by placing the scanners as close as possible to each other on the scan side of the beam path (minimum separation between R_{X1}, R_{Y1}) and/or by using a dedicated optical relay; the latter requires space and beam path length compared to close spacing, but may one or more of reduce or prevent pupil shift, improve freedom of arranging the optical path, improve resolution.

For a scanner that is used twice, one may use one side under two different angles, or a front and back side. A scanner (in particular the first scanning element SX) used on a single side, may be used under two different angles of incidence. This may allow use of the scanner to direct the beam directly towards the optical detector, providing an automatic bypass function.

The static path may be designed to provide a correct orientation of the beam spot on each reflection (R_{Y1}, R_{X1}, R_{X2}, R_{Y2}) so as not to affect resolution; this may be provided by an odd number of mirrors/reflections and one focus (not shown).

When using spatial filtering, the sample light beam may have a larger diameter after the pinhole P than before it. In case of double reflection on a single scanning element surface, and an expanded beam may use the smaller angle of incidence on at least the first scanning element SX.

The disclosure is not restricted to the above-described embodiments which can be varied in a number of ways within the scope of the claims.

Elements and aspects discussed for or in relation with a particular embodiment may be suitably combined with elements and aspects of other embodiments, in particular subject matter of any combination of the appended claims may be provided, unless explicitly stated otherwise.

## Claims

1. A scan optical system (1, 10, 100, 200, 300) comprising a plurality of optical elements, comprising a first scanning element (SX) and a second scanning element (SY), and defining a light beam path from a first location to a second location,
such that the light beam path comprises at least a first reflection (R_{Y1}) and a second reflection (R_{Y2}) on the second scanning element (S_{Y1}), and
such that the light beam path comprises a third reflection (R_{X1}) on the first scanning element (SX), and wherein at least one of:
the first reflection (R_{Y1}) is on a first side (SY₁) of the second scanning element (SY) and the second reflection (R_{Y2}) is on a second side (SY₂) of the second scanning element (SY),
the third reflection (R_{X1}) is arranged between the first and second reflections (R_{Y1}, R_{Y2}) along the light beam path, and
the light beam path comprises a first relay segment relaying the first and third reflections (R_{Y1}, R_{X1}) onto each other, and/or a second relay segment relaying the second and third reflections (R_{Y2}, R_{X1}) onto each other.

2. The system (1, 10, 100, 200, 300) according to claim 1, wherein the first and second sides are opposite sides (SY₁, SY₂) of the second scanning element (SY), e.g. a front side (SY₁) and a back side (SY₂) of the second scanning element (SY).

3. The system (1, 10, 100, 200, 300) according to any preceding claim, wherein the light beam path comprises the first relay segment relaying the first and third reflections (R_{Y1}, R_{X1}) onto each other, and the first relay segment provides an odd number of image inversions from the first to the third reflection (R_{Y1}, R_{X1}), and/or
wherein the light beam path comprises the second relay segment relaying the second and third reflections (R_{Y2}, R_{X1}) onto each other, and the second relay segment provides an odd number of image inversions from the second to the third reflection (R_{Y2}, R_{X1}).

4. The system (1, 10, 100, 200, 300) according to any preceding claim, wherein the light beam path comprises the first relay segment relaying the first and third reflections (R_{Y1}, R_{X1}) onto each other, and the first relay segment crosses itself, and/or
wherein the light beam path comprises the second relay segment relaying the second and third reflections (R_{Y2}, R_{X1}) onto each other, and the second relay segment crosses itself.

5. The system (1, 10, 100, 200, 300) according to any preceding claim, wherein the first and second scanning elements (SX, SY) are arranged for scanning in mutually different directions, preferably mutually perpendicular directions, and/or
wherein the first and second scanning elements (SX, SY) are arranged for scanning in mutually different scanning speeds, e.g. the first scanning element is arranged for a fast scan and the second scanning element being arranged for a slow scan.

6. The system (1, 10, 100, 200, 300) according to any preceding claim, wherein the light beam path comprises a fourth reflection (R_{X2}) on the first scanning element (SX), in particular being arranged between the first and second (R_{Y1}, R_{Y2}) reflections along the light beam path.

7. The system (1, 10, 100, 200, 300) according to claim 6, wherein the third and fourth reflections (R_{X1}, R_{X2}) on the first scanning element (SX) are on a same side (SX₁) of the first scanning element (SX), or
wherein the third and fourth reflections (R_{X1}, R_{X2}) on the first scanning element (SX) are on opposite sides (SX₁, SX₂) of the first scanning element (SX) e.g. a front side (SX₁) and a back side (SX₂) of the second scanning element (SX).

8. The system (1, 10, 100, 200, 300) according to claim 6 or 7, comprising a further relay segment relaying the first and fourth reflections (R_{Y1}, R_{X2}) onto each other, and/or a further relay segment relaying the second and fourth reflections (R_{Y2}, R_{X2}) onto each other, and/or a further relay segment relaying the third and fourth reflections (R_{X1}, R_{X2}) onto each other.

9. The system (1, 10, 100, 200, 300) according to any preceding claim, wherein the plurality of optical elements defines:
an illumination light path for directing a beam of illumination light from a light source at a light source location to a target location, and/or
a sample light path for directing a beam of sample light from a/the target location to an image plane location for an image plane of an optical detector; and
wherein the light beam path forms at least part of the illumination light path and/or of the sample light path.

10. The system (1, 10, 100, 200, 300) according to claim 9, wherein the plurality of optical elements defines at least the illumination light path and the light beam path forms at least part of the illumination light path; and
wherein the illumination light path comprises, along the illumination light path from the light source location towards the target location:
an incident illumination light path segment and at least one of
a first scanning illumination light path segment defined by the first scanning element, and
a second scanning illumination light path segment defined by the second scanning element.

11. The system (1, 10, 100, 200, 300) according to claim 9 or 10, wherein the plurality of optical elements defines at least the sample light path and the light beam path forms at least part of the sample light path, the sample light path comprising, along the sample light path from the target location towards the image plane location, a scanning sample light path segment, and a further sample light path segment that may be a de-scanned sample light path segment.

12. The system (1, 10, 100, 200, 300) according to claim 11, comprising, along the sample light path from the target location towards the image plane location, a re-scanning sample light path segment.

13. The system according to claim 11 or 12, wherein the scanning sample light path segment comprises a first scanning sample light path segment defined by the first scanning element (SX) and a second scanning sample light path segment defined by the second scanning element (SY), and/or
wherein the de-scanned sample light path segment comprises a first de-scanned sample light path segment defined by the first scanning element (SX) and a second de-scanned sample light path segment defined by the second scanning element (SY), and/or
wherein, in case of the system according to claim 12, the re-scanning sample light path segment comprises a first re-scanning sample light path segment defined by the first scanning element (SX) and/or a second re-scanning sample light path segment defined by the second scanning element (SY).
